# EUROPÄISCHE PATENTSCHRIFT

(11) **EP 3 076 186 B1**
(45) Veröffentlichungstag und Bekanntmachung des Hinweises auf die Patenterteilung: **17.05.2017**
(21) Anmeldenummer: 16167113.6
(22) Anmeldetag: 07.07.2014
(51) Int. Cl.: G01P 5/24, G01F 23/28, G01S 13/58, G01S 13/87, G01S 13/88, G01F 1/00, G01F 1/66, G01F 23/284

(54) **BESTIMMUNG VON PEGEL UND FLIESSGESCHWINDIGKEIT EINES MEDIUMS**
DETERMINATION OF THE LEVEL AND FLOW SPEED OF A MEDIUM
DETERMINATION DU NIVEAU ET DU TAUX DE FLUAGE D'UN MILIEU

(30) Priorität: 08.07.2013 DE 102013213346
(43) Veröffentlichungstag der Anmeldung: 05.10.2016
(62) Teilanmeldung aus: 14176010.8
(73) Patentinhaber: VEGA Grieshaber KG, 77709 Wolfach (DE)
(72) Erfinder: SCHULTHEISS, Daniel, 78132 Hornberg (DE); FEHRENBACH, Josef, 77716 Haslach i. K. (DE); MOTZER, Jürgen, 77723 Gengenbach (DE)
(74) Vertreter: Schäflein, Christian Georg

(56) Entgegenhaltungen:
- WO-A1-2010/142512
- US-A- 5 420 591
- US-A1- 2010 031 753
- US-B1- 7 721 600

## Beschreibung

### Gebiet der Erfindung

Die Erfindung betrifft die Fließgeschwindigkeits- und Pegelmessung von fließenden Gewässern. Insbesondere betrifft die Erfindung ein Füllstandmessgerät zur Bestimmung einer Distanz zu einem Medium sowie einer Fließgeschwindigkeit des Mediums durch Auswertung eines von dem Füllstandmessgerät abgestrahlten und von dem Medium reflektierten Sendesignals, ein Verfahren zum Bestimmen einer Distanz zu einem Medium sowie einer Fließgeschwindigkeit des Mediums, ein Programmelement und ein computerlesbares Medium.

### Hintergrund

Es sind Messgeräte zur Messung der Distanz zwischen dem Sensor und der Oberfläche eines Mediums (also dem "Füllstand" oder Pegel) sowie der Fließgeschwindigkeit und der Fließrichtung des Mediums bekannt, die aus zwei verschiedenen Messsystemen zur Ermittlung der Distanz (Messsystem 1) und der Fließgeschwindigkeit (Messsystem 2) bestehen.

Die Distanz wird über ein Pulsradarsystem ermittelt. Die Bestimmung der Fließgeschwindigkeit hingegen erfolgt durch Dopplerauswertung eines konstanten Sendesignals, das auch als CW Signal bezeichnet wird, wobei CW für Continuous Wave steht. Beide Geräte sind dann in einem gemeinsamen Gehäuse untergebracht.

Die US 2010/031753 A1 offenbart ein Füllstandmessgerät zur Bestimmung einer Distanz zu einem Medium sowie einer Fließgeschwindigkeit des Mediums gemäß dem Oberbegriff des Anspruchs 1.

### Zusammenfassung der Erfindung

Es ist eine Aufgabe der Erfindung, eine alternative Bestimmung von der Distanz zwischen einem Sensor und der Oberfläche eines Mediums und der Fließgeschwindigkeit des Mediums anzugeben.

Diese Aufgabe wird durch die Merkmale der unabhängigen Patentansprüche gelöst. Weiterbildungen der Erfindung ergeben sich aus den Unteransprüchen und der nachfolgenden Beschreibung.

Ein erster Aspekt der Erfindung betrifft ein Abstandmessgerät, beispielsweise ein Füllstandmessgerät, welches zur Bestimmung einer Distanz zu einem Medium sowie einer Fließgeschwindigkeit des Mediums durch Auswertung eines von dem Messgerät abgestrahlten und von dem Medium reflektierten Sendesignals ausgeführt ist. Es handelt sich also um eine berührungslose Messung mithilfe propagierender, elektromagnetischer oder akustischer Wellen.

Das Messgerät weist ein Signalerzeugungsmodul auf, welches das abzustrahlende Sendesignal erzeugt. Weiter ist eine Antennenanordnung vorgesehen, die zum Abstrahlen des Sendesignals in eine erste Richtung, die senkrecht zur Fließrichtung des Mediums liegt, und in eine zweite Richtung, die ungleich der ersten Richtung ist, ausgeführt ist. Beispielsweise kann die zweite Richtung einen Winkel α zur Fließrichtung des Mediums und damit zu dessen Oberfläche aufweisen, der zwischen 0 Grad und 90 Grad liegt und beispielsweise zwischen 30 Grad und 60 Grad beträgt, beispielsweise in etwa 45 Grad.

Darüber hinaus weist das Messgerät eine Prozessoreinheit zur Bestimmung der Distanz zum Medium sowie der Fließgeschwindigkeit des Mediums durch Auswertung des von dem Medium reflektierten und von der Antennenanordnung aufgenommenen Sendesignals auf.

Das Abstrahlen des Sendesignals in die beiden Richtungen kann auf unterschiedliche Weise erfolgen. Beispielsweise kann vorgesehen sein, dass ein Teil des Sendesignals in die erste Richtung abgestrahlt wird und gleichzeitig ein zweiter Teil des Sendesignals in die zweite Richtung. Auch kann vorgesehen sein, dass zunächst das gesamte Sendesignal in die erste Richtung abgestrahlt wird und zeitlich darauffolgend das Sendesignal vollständig in die zweite Richtung abgestrahlt wird. Dies kann durch einen Umschaltvorgang im Messgerät geschehen, wie weiter unten genauer beschrieben.

Gemäß einer nicht-erfindungsgemäßen Ausführungsform ist die Antennenanordnung eine einzelne Antenne mit zwei oder mehr Abstrahlrichtungen. Es kann sich um eine planare Antenne handeln oder aber auch um einen Array von Einzelantennen, der so ausgebildet ist, dass zwei (oder mehr) Hauptabstrahlrichtungen vorliegen, in die das Sendesignal abgestrahlt wird.

Auch kann vorgesehen sein, dass sich die Antennenanordnung gegenüber einem Gehäusebereich des Messgeräts, der zur Befestigung des Messgeräts an einen Träger vorgesehen ist, drehen lässt, so dass sich die Antennenanordnung optimal zur Fließrichtung des Gewässers ausrichten lässt, ohne dass hierfür das Messgerät selber ausgerichtet werden muss. Erfindungsgemäß weist die Antennenanordnung eine erste Antenne und eine zweite Antenne auf, wobei die erste Antenne zum Abstrahlen des Sendesignals in die Erstrichtung und die zweite Antenne zum Abstrahlen des Sendesignals in die zweite Richtung ausgeführt ist.

Gemäß einer Ausführungsform der Erfindung sind die zwei Antennen beide über einen einzelnen Richtkoppler, einen einzelnen Umschalter oder einen einzelnen Leistungssplitter an das Signalerzeugungsmodul angeschlossen.

Gemäß einer weiteren Ausführungsform der Erfindung ist das Signalerzeugungsmodul ein Hochfrequenzmodul, beispielsweise ein FMCW-Modul (FMCW: Frequency Modulated Continuous Wave). Bei zumindest einem ersten Teil des Sendesignals handelt es sich um ein frequenzmoduliertes kontinuierliches Wellensignal (FMCW).

Es kann vorgesehen sein, dass das FMCW-Modul seinen Signalerzeugungsmodus ändern kann, so dass es neben einem FMCW-Sendesignal auch ein gleichförmiges CW-Sendesignal erzeugen kann.

In diesem Fall weist das Sendesignal also einen zweiten Teil auf, bei dem es sich um ein kontinuierliches Wellensignal (CW) handelt, wobei das Füllstandmessgerät ausgeführt ist, den ersten Teil des Sendesignals nur in die erste Richtung und den zweiten Teil des Sendesignals (CW) nur in die zweite Richtung abzustrahlen.

Gemäß einer weiteren Ausführungsform der Erfindung ist das FMCW-Modul zur Erzeugung eines frequenzmodulierten Sendesignals ausgeführt, das eine ansteigende und eine abfallende Frequenzrampe aufweist. Hierdurch ist die simultane Messung von Entfernungen und Geschwindigkeiten möglich. Die ansteigende und die abfallende Flanken einer solchen dreieckförmigen Modulation haben eine unterschiedliche Richtung der Dopplerverschiebung. Eine Signalverarbeitung erfolgt beispielsweise erst nach einer kleinen Pause nach den Wendepunkten der gesendeten Frequenzmodulation.

Die Verwendung einer dreieckförmigen Modulationsform bietet die Möglichkeit, die Dopplerfrequenz als Maß für eine Radialgeschwindigkeit als unabhängige Messgröße neben der Entfernungsmessung zu ermitteln. Während der Annäherung erhöht sich die Empfangsfrequenz und vermindert so während der steigenden Frequenzrampe den Betrag der Differenzfrequenz. Durch die Überlagerung mit der Dopplerfrequenz ist die Frequenzdifferenz bei Messung einer Annäherung in der ansteigenden Flanke der dreieckförmigen Modulation geringer, in der fallenden Flanke ist sie um den gleichen Betrag höher als bei einem statischen Reflektor.

Bei entgegengesetzter Fließrichtung (also vom Sensor entfernend) reduziert sich die Empfangsfrequenz und erhöht damit während der steigenden Frequenzrampe die Differenzfrequenz. Äquivalent hierzu verringert sich die Differenzfrequenz in der fallenden Rampe. Bei beitragsmäßig gleicher Steilheit der Frequenzänderung in steigender und fallender Flanke des Dreiecksignals ist der Mittelwert der Differenzfrequenz aus beiden Messperioden ein Entfernungsmaß, unabhängig von der Geschwindigkeit. Die Summe der Differenzfrequenzen ist ein Maß für die halbe Radialgeschwindigkeit des Objekts.

Durch Auswertung der Richtung der Frequenzverschiebung bei steigender bzw. fallender Frequenzrampe lässt sich zudem die Fließrichtung bestimmen.

An die Linearität der Frequenzänderung werden im Regelfall hohe Anforderungen gestellt.

Gemäß einer weiteren Ausführungsform der Erfindung ist die Prozessoreinheit zur Bestimmung der Distanz zum Medium sowie der Fließgeschwindigkeit des Mediums innerhalb eines einzigen Messzyklus ausgeführt.

Es ist zu berücksichtigen, dass es in allen Ausführungsformen der Erfindung vorgesehen sein kann, dass das Sendesignal, unabhängig davon, ob es senkrecht zur Fließrichtung des Mediums und/oder schräg zur Fließrichtung des Mediums abgestrahlt wird, von demselben Signalerzeugungsmodul erzeugt wird. Insbesondere kann auch vorgesehen sein, dass die empfangenen, reflektierten Sendesignale von derselben Prozessoreinheit ausgewertet werden. Aus dem in die erste Richtung abgestrahlten Sendesignal kann nach dessen Reflexion an der Oberfläche des Füllmediums die Distanz bestimmt werden und aus dem in die zweite Richtung abgestrahlten Sendesignal die Fließgeschwindigkeit des Mediums.

Die Bestimmung der Fließgeschwindigkeit und der Distanz des Füllstandmessgeräts zum Medium kann durch eine einzelne Messung erfolgen, bei der das Sendesignal in die erste Richtung senkrecht zur Fließrichtung des Mediums und davor, danach oder gleichzeitig in die zweite Richtung schräg zur Fließrichtung des Mediums abgestrahlt wird.

Die Abstrahlung des Sendesignals erfolgt demnach zunächst in zwei verschiedene Richtungen, gefolgt von einer Auswertung der entsprechenden, an der Oberfläche des Füllmediums reflektierten Signale, welche die Bestimmung der Fließgeschwindigkeit und der Distanz (Füllstand bzw. Pegel) ermöglicht.

Neben der gleichzeitigen Abstrahlung des Sendesignals in die zwei verschiedenen Richtungen ist es auch möglich, zunächst das Sendesignal in die erste Richtung abzustrahlen und daraufhin in die zweite Richtung (oder umgekehrt).

Die Bestimmung von Distanz und Fließgeschwindigkeit kann sequenziell oder parallel erfolgen, je nach Ausführungsform des Füllstandmessgeräts.

Auch kann vorgesehen sein, dass sich der Messzyklus wie folgt definiert: Die Distanz wird mehrmals gemessen, indem zeitlich aufeinanderfolgende Sendesignale in die erste Richtung abgestrahlt und die entsprechend reflektierten Signale ausgewertet werden. Die Auswertung des schräg zur Fließrichtung des Mediums abgestrahlten Sendesignals erfolgt jedoch weniger oft, beispielsweise nur nach jeder zehnten oder zwanzigsten Messung der Distanz. Dies kann bedeuten, dass das Sendesignal in die zweite Richtung auch nur dann abgestrahlt wird, wenn eine bestimmte Anzahl an Distanzmessungen erfolgt ist oder wenn eine bestimmte Zeit seit der letzten Fließgeschwindigkeitsbestimmung vergangen ist (beispielsweise eine Minute).

Es ist aber auch möglich, dass das Sendesignal öfter in die zweite Richtung abgestrahlt wird, das entsprechende reflektierte Signal, das aus dieser Richtung von der Antennenanordnung aufgenommen wird, jedoch nur dann auch ausgewertet wird (um die Fließgeschwindigkeit zu bestimmen), wenn eine bestimmte Anzahl von Füllstandmessungen erfolgt ist oder eine bestimmte Zeit seit der letzten Fließgeschwindigkeitsbestimmung vergangen ist (beispielsweise eine oder zwei Minuten).

Es ist erfindungsgemäß vorgsesehen, dass die Bestimmung der Fließgeschwindigkeit durch ein bestimmtes Ereignis getriggert wird. Hierbei kann es sich, wie bereits beschrieben, um die Durchführung einer bestimmten Anzahl an Distanzmessungen und/oder den Ablauf einer bestimmten Zeit seit der letzten Fließgeschwindigkeitsbestimmung handeln. Alternativ oder zusätzlich kann es sich bei dem die Fließgeschwindigkeitsbestimmung auslösenden Ereignis aber auch darum handeln, dass sich der Pegelstand (also die "Distanz") während einer vorbestimmten Zeit um mehr als einen vorbestimmten Schwellwert geändert hat. In anderen Worten wird gemäß dieser Ausführungsform eine Fließgeschwindigkeitsmessung dann getriggert, wenn sich die Distanz schnell genug ändert.

Das Messgerät ist gemäß einer weiteren Ausführungsform der Erfindung ein Füllstandradar oder ein anderes Füllstandmessgerät.

Gemäß einem weiteren Aspekt der Erfindung ist ein Verfahren zum Bestimmen einer Distanz zu einem Medium sowie einer Fließgeschwindigkeit des Mediums durch Auswerten eines von einem Messgerät abgestrahlten und von dem Medium reflektierten Sendesignals angegeben. Das Verfahren weist die folgenden Schritte auf: Erzeugen eines Sendesignals; Abstrahlen des Sendesignals in eine erste Richtung senkrecht zur Fließrichtung des Mediums und in eine zweite Richtung, die ungleich der ersten Richtung ist; Bestimmen der Distanz zum Medium sowie der Fließgeschwindigkeit des Mediums durch Auswerten des von dem Medium reflektierten und von der Antennenanordnung aufgenommenen Sendesignals.

Gemäß einem weiteren Aspekt der Erfindung ist ein Programmelement angegeben, das, wenn es auf einer Prozessoreinheit eines Füllstandmessgeräts ausgeführt wird, das Füllstandmessgerät anleitet, die oben und im Folgenden beschriebenen Verfahrensschritte durchzuführen.

Gemäß einem weiteren Aspekt der Erfindung ist ein computerlesbares Medium angegeben, auf dem ein Programmelement gespeichert ist, das, wenn es auf einer Prozessoreinheit eines Füllstandmessgeräts ausgeführt wird, das Füllstandmessgerät anleitet, die oben und im Folgenden beschriebenen Verfahrensschritte auszuführen.

Insbesondere kann das Messgerät zum Anschluss an eine 4...20mA ZweidrahtLeitung ausgeführt sein, über welche es gleichzeitig mit Energie für den Messbetrieb beliefert wird und einen Messwert übertragen kann, der proportional zum fließenden Strom ist.

Im Folgenden werden Ausführungsbeispiele der Erfindung unter Bezugnahme auf die Figuren beschrieben. Darin bezeichnen gleiche Bezugszeichen gleiche oder ähnliche Elemente. Gleiche oder ähnliche Elemente können aber auch durch unterschiedliche Bezugszeichen bezeichnet sein.

### Kurze Beschreibung der Figuren

Fig. 1 zeigt ein Messgerät gemäß einem nicht-erfindungsgemäßen Ausführungsbeispiel mit einer einzelnen Antenne.
Fig. 2 zeigt ein Messgerät gemäß einem Ausführungsbeispiel der Erfindung mit zwei Antennen.
Fig. 3 zeigt ein Messsignal und ein Empfangssignal gemäß einem Ausführungsbeispiel der Erfindung.
Fig. 4 zeigt FFT-transformierte Signale am Empfängerausgang von Rampe 1 und Rampe 2.
Fig. 5 zeigt ein Messgerät gemäß einem nicht-erfindungsgemäßen Ausführungsbeispiel mit einer einzelnen Antenne.
Fig. 6 zeigt ein weiteres FFT-transformiertes Signal am Empfängerausgang des Messgeräts.
Fig. 7 zeigt ein weiteres FFT-transformiertes Signal am Empfängerausgang eines Messgeräts.
Fig. 8 zeigt ein Flussdiagramm eines Verfahrens gemäß einem Ausführungsbeispiel der Erfindung.

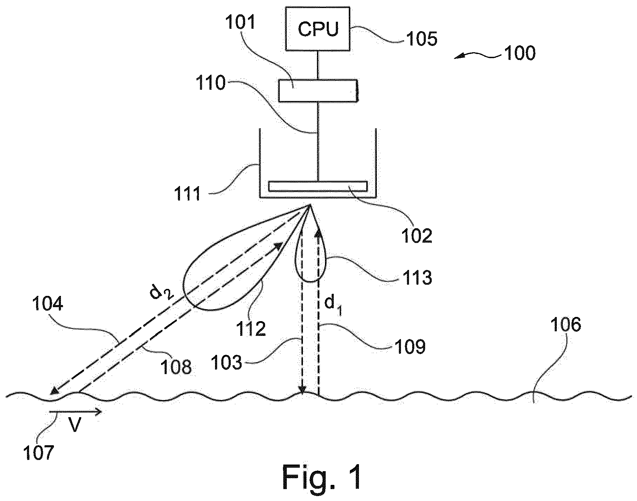

Detaillierte Beschreibung von Ausführungsbeispielen Die Darstellungen in den Figuren sind schematisch und nicht maßstäblich. Fig. 1 zeigt ein Messgerät 100 gemäß einem nicht-erfindungsgemäßen Ausführungsbeispiel mit einer einzelnen Antenne. Bei dem Messgerät handelt es sich um ein Distanzmessgerät, beispielsweise in Form eines Füllstandradars.

Die Messung der Fließgeschwindigkeit des Mediums, bei dem es sich um ein Fluid handelt, und der Distanz zum Sensor 100 sind in einem einzigen Messystem, beispielsweise ein FMCW-Radarsystem, kombiniert. Das Messgerät weist eine einzelne Antenne auf, deren Abstrahlcharakteristik so angepasst ist, dass ein erster Teil des Sendesignals (also ein Strahl des Sendesignals) zur Distanzmessung und ein zweiter Teil (zweiter Strahl des Sendesignals) zur Fließgeschwindigkeitsmessung benutzt werden kann (vgl. Fig. 1).

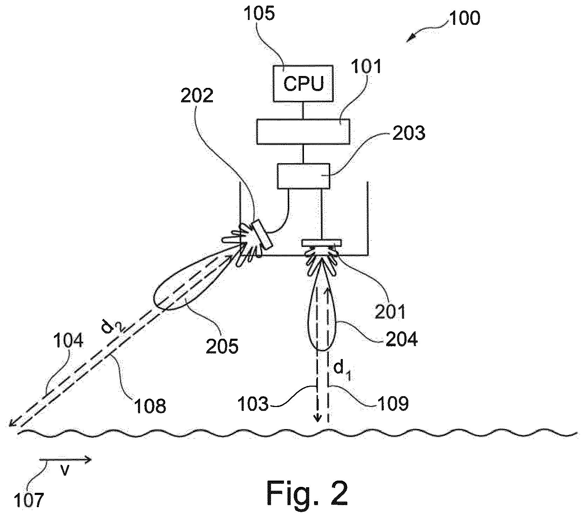

Bei Verwendung von zwei Antennen (vgl. Fig. 2) können mit einem Umschalter abwechselnd die Distanz bzw. die Fließgeschwindigkeit des Mediums gemessen werden.

Werden beide Antennen zusammen über einen Richtkoppler oder einen Leistungsteiler an das Sendesignalerzeugungs-Modul (beispielsweise ein HF-Modul) angeschlossen, dann können beide Messungen gleichzeitig erfolgen, da das Sendesignal ja gleichzeitig in die beiden Richtungen abgestrahlt wird.

Hierdurch ergibt sich ein einfacher Aufbau zur Messung der Distanz zu einer Oberfläche des Mediums und zur gleichzeitigen Messung der Fließgeschwindigkeit und ggf. auch der Fließrichtung des Mediums. Auch kann die Durchflussmenge mit einem solchen Messgerät bestimmt werden, wenn die Geometrie des Fließbetts der Flüssigkeit bekannt ist.

Das Messgerät 100 weist eine Prozessoreinheit 105 auf, die an das HF-Modul 101 (Sendesignalerzeugungseinheit) angeschlossen ist. Das HF-Modul ist über die Signalleitung 110 an eine planare Antenne 102 angeschlossen. Die planare Antenne 102 befindet sich in einem Gehäuse 111 und es kann vorgesehen sein, dass die Antenne gegen das HF-Modul verdreht werden kann.

Die Antenne 102 strahlt ein Sendesignal 112, 113 ab, wobei ein verhältnismäßig großer Anteil des Sendesignals in eine Richtung 104 schräg zur Fließgeschwindigkeit 107 des Fluids 106 gerichtet ist. Zumindest ein Teil dieses schräg abgestrahlten Signalanteils wird von der Oberfläche des fließenden Fluids reflektiert und in Richtung 108 an die Antenne 102 zurückgesendet. Die Antenne 102 nimmt dann diesen reflektierten Signalanteil des Sendesignals auf.

Vorteilhaft für die Messung der Fließgeschwindigkeit ist es, wenn die Oberfläche des Fluids 106 eine Wellenbildung oder Kräuselung aufweist.

Gleichzeitig wird ein zweiter, beispielsweise geringerer Signalanteil 113 senkrecht zur Fließgeschwindigkeit 107 des Fluids 106 in Richtung 103 abgestrahlt, an der Oberfläche des Fluids reflektiert und in umgekehrter Richtung 109 zurück zur Antenne gestrahlt. Die Antenne 102 nimmt dann diesen Signalanteil des reflektierten Sendesignals auf.

Aus den aufgenommenen, reflektierten Sendesignalanteilen wird dann eine Echokurve erzeugt, aus welcher die Distanz d₁, bei der es sich um die kürzeste Entfernung zwischen dem Sensor 100 und dem Fluid 106 handelt, und die Distanz d₂, bei der es sich um die Weglänge handelt, die das schräg abgestrahlte Sendesignal in Richtung 104 zurücklegt, bevor es an der Fluidoberfläche reflektiert wird, handelt.

Die Berechnung der Distanz d₁ erfolgt durch Auswertung des senkrecht zur Oberfläche des Fluids reflektierten Signalanteils des Sendesignals und die Bestimmung der Fließgeschwindigkeit erfolgt durch eine Dopplerauswertung des schräg zur Fließrichtung 107 abgestrahlten Signalanteils.

Die Hauptabstrahlrichtung der Antenne kann für die Messung der Fließgeschwindigkeit verwendet werden, wohingegen über die Nebenkeule die Distanz ermittelt wird.

Auch kann vorgesehen sein, dass die Antenne zwei Schwerpunkte für die Abstrahlung, also zwei Hauptabstrahlrichtungen, aufweist. Realisiert werden kann dies z. B. mittels eines Patcharrays, das in zwei definierte Richtungen abstrahlt, wie dies in der Fig. 1 gezeigt ist. Die Richtwirkung für die Distanzmessung kann dabei geringer ausfallen, da hier bessere Reflexionseigenschaften zu erwarten sind (aufgrund der senkrechten Ausrichtung der Abstrahlrichtung 103 zur Oberfläche des Mediums).

Die Auswertung kann in einem Messzyklus erfolgen. Das erste Echo (welches der kürzesten Entfernung zwischen dem Sensor und der Fluidoberfläche entspricht) gibt die Distanz aus, aus dem weiter entfernten Echo kann die Geschwindigkeit und die Fließrichtung ermittelt werden.

Fig. 2 zeigt ein Messgerät gemäß einem Ausführungsbeispiel der Erfindung. Im Vergleich zum nicht-erfindungsgemäßen Ausführungsbeispiel der Fig. 1 sind zwei Antennen 201, 202 vorgesehen, welche jeweils über eine eigene Signalleitung an einen Richtkoppler, einen Leistungssplitter oder einen Umschalter 203 angeschlossen sind, der die beiden Antennen mit dem HF-Modul 101 verbindet. Es ist also ein FMCW-Modul für beide Messungen (Distanz und Fließgeschwindigkeit) vorgesehen, welches mit je einer Antenne für die Distanzmessung und einer anderen Antenne für die Fließgeschwindigkeit über einen Umschalter, einen Powersplitter oder Richtkoppler gekoppelt ist. Über den Umschalter kann jeweils eine der beiden Antennen zur Messung ausgewählt werden.

Somit sind abwechselnde Messungen von Distanz und Fließgeschwindigkeit möglich. Die Umschaltung zwischen beiden Messverfahren erfolgt auf dem HF-Signalpfad zwischen der Antenne und dem HF-Modul 101.

Auch kann, wie bereits beschrieben, das HF-Modul mit den beiden Antennen über einen Richtkoppler oder Powersplitter 203 verbunden sein, wie dies jedenfalls in der Fig. 2 schematisch gezeigt ist. Für beide Messungen wird hier jeweils eine optimierte Antenne eingesetzt. Die Antenne 201 strahlt das Sendesignal senkrecht zur Fließrichtung 107 ab, wie dies durch die Sendekeule 204 symbolisiert ist. Die zweite Antenne 202, welche schräg zur ersten Antenne 201 angeordnet ist, strahlt das Sendesignal in die schräge Richtung 104 ab, wie dies durch die Sendekeule 205 symbolisiert ist.

Durch die Verwendung von zwei getrennten Antennen können größere Amplituden der beiden Empfangssignale erreicht werden. Die Auswertung erfolgt wie in den anderen Ausführungsbeispielen.

Zur Bestimmung der Distanz und der Fließgeschwindigkeit bzw. der Fließrichtung kann vorgesehen sein, dass zwei Frequenzrampen nach allgemeinen bekannten FMCW-Radarverfahren durchfahren werden. Die horizontale Achse 301 bezeichnet die Zeit t und die vertikale Achse 302 bezeichnet die Frequenz f.

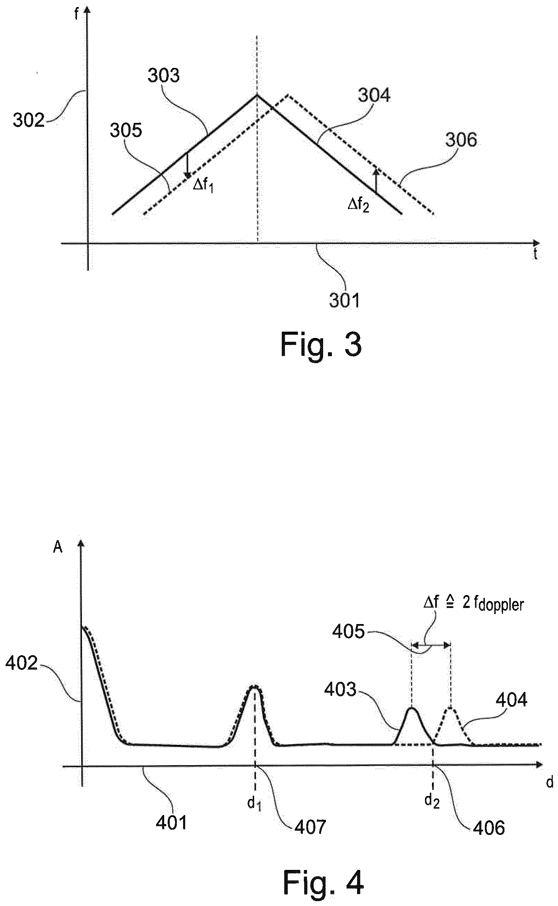

Die erste Rampe ist beispielsweise in der Frequenz steigend, startet mit der Frequenz f1 und endet bei der Frequenz f2. Anschließend startet die fallende zweite Rampe bei f2 und endet bei der Frequenz f1 (vgl. Fig. 3). Die erste Rampe ist durch Bezugszeichen 303 bezeichnet und die zweite Rampe durch Bezugszeichen 304.

Die zu dieser Kurve nach rechts verschobene Kurve 305, 306 gibt das von der Antennenanordnung empfangene Empfangssignal (von der Füllgutoberfläche reflektierte Sendesignal) wieder.

Das von der Füllgutoberfläche reflektierte Sendesignal wird mittels eines Analog-Digital-Wandlers abgetastet und in einem Mikroprozessor mittels einer schnellen Fourier-Transformation (FFT) in den Frequenzbereich transformiert.

Daraus ergeben sich zwei Spektren, die in der Fig. 4 dargestellt sind.

Die horizontale Achse 401 bezeichnet hierbei die Distanz d zwischen dem Sensor und dem entsprechenden Reflektor und die vertikale Achse 402 bezeichnet die Amplitude des Empfangssignals.

Das erste Echo 407 am Ort d₁ (kürzeste Entfernung) gibt die Distanz d1 zum Medium an, aus den weiter entfernten Echos in der Nähe des Ortes 406 können die Geschwindigkeit des Mediums und dessen Fließrichtung ermittelt werden.

Die Reflexion aus der Distanzmessung ergibt bei beiden Rampen die gleiche Differenzfrequenz aus gesendetem und empfangenem Signal.

Die Reflexion aus dem schräg auftreffenden Signal, das in Richtung 104 abgestrahlt wurde (vgl. Fig. 1 und 2) wird zur Bestimmung der Fließgeschwindigkeit verwendet und wird durch den Dopplereffekt in der Frequenz um f_{Doppler} verschoben. Dadurch ergeben sich bei steigender bzw. fallender Rampe unterschiedliche Differenzfrequenzen. Diese unterscheiden sich um 2 x f_{Doppler}, wie dies an den Peaks 403, 404 zu erkennen ist. Der eine Peak 403, der in Bezug auf die tatsächliche Distanz d₂ nach links verschoben ist, ergibt sich aus dem Empfangssignal der ansteigenden Frequenzrampe 303 (vgl. Fig. 3) und das nach rechts verschobene Peaksignal 404 ergibt sich aus dem Empfangssignal der fallenden Frequenzrampe 306.

Der Pfeil 405 symbolisiert den Frequenzunterschied Δf zwischen den beiden Peaks, bei der es sich um die zweifache Dopplerverschiebung handelt.

Die ansteigende und die abfallende Flanke der dreieckförmigen Modulation haben eine unterschiedliche Richtung der Dopplerverschiebung. Eine Signalverarbeitung erfolgt beispielsweise erst nach einer kleinen Pause nach den Wendepunkten der gesendeten Frequenzmodulation. Es handelt sich um eine sog. dreieckförmige Modulation. Die Verwendung einer dreieckförmigen Modulationsform bietet die Möglichkeit, die Dopplerfrequenz als Maß für eine Radialgeschwindigkeit als unabhängige Messgröße neben der Entfernungsmessung zu ermitteln. Während der Annäherung erhöht sich die Empfangsfrequenz und verringert so während der steigenden Flanke den Betrag der Differenzfrequenz. Durch die Überlagerung mit der Dopplerfrequenz ist die Frequenzdifferenz bei Messung einer Annäherung in der ansteigenden Flanke der dreieckförmigen Modulation geringer. In der fallenden Flanke ist sie um den gleichen Betrag höher als bei einem statischen Reflektor. Bei betragsmäßig gleicher Steilheit der Frequenzänderung in steigender und fallender Flanke des Dreiecksignals ist ein Mittelwert der Differenzfrequenz aus beiden Messperioden ein Entfernungsmaß, unabhängig von der Geschwindigkeit. Die Summe der Differenzfrequenz ist ein Maß für die halbe Radialgeschwindigkeit des Objekts. An die Linearität der Frequenzänderung werden im Regelfall hohe Anforderungen gestellt.

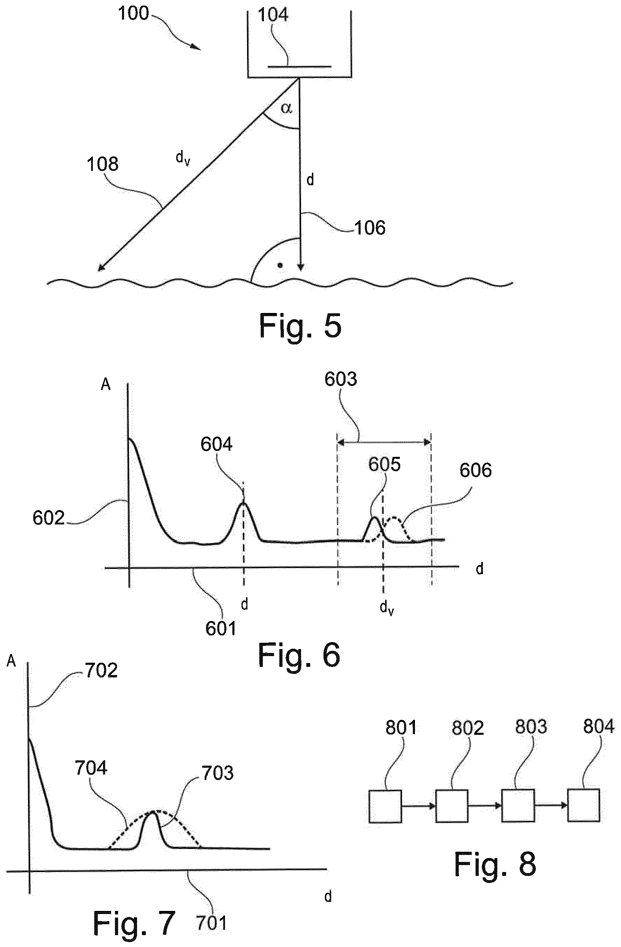

Die erwartete Entfernung für die Ermittlung der Geschwindigkeit kann zusätzlich aus dem bekannten Winkel α zwischen den beiden Antennenabstrahlrichtungen 103, 104 und der Distanz zum Medium berechnet werden. Hierdurch kann bei nicht eindeutigen Echoverhältnissen ein Messfenster 603 erzeugt werden und somit eine höhere Messsicherheit erreicht werden (vgl. Fig. 5 und 6).

In der Fig. 6 ist wie auch schon in der Fig. 4 die Distanz bzw. Entfernung d 601 gegen die Amplitude 602 des Empfangssignals (reflektiertes Sendesignal) aufgetragen, nachdem dieses einer Fourier-Transformation unterzogen wurde. Auch hier sind der Hauptpeak 604, welcher der Distanz zwischen Sensor und Mediumoberfläche entspricht, sowie die beiden Peaks 605, 606 zu erkennen, welche auf das schräg abgestrahlte Sendesignal zurückzuführen sind. Diese beiden Peaks liegen innerhalb des Messfensters 603.

Die Fließgeschwindigkeit des Mediums kann aber auch auf andere Weise bestimmt werden: Insbesondere bei der Verwendung von nur einer Antenne mit einer Hauptabstrahlrichtung kann die Fließgeschwindigkeit auch direkt im reflektierten Signal gemessen werden. Hierbei wird nur das Echo bei der Distanz d zur Oberfläche des Mediums betrachtet.

Da eine Antenne auch immer Anteile außerhalb der Hauptabstrahlrichtung absendet und empfängt und der Sensor damit auch schräg zur Oberfläche des Mediums misst, liegen an einem Empfänger des FMCW-Radarmoduls auch immer Signale an, die mit der Dopplerfrequenz durch die Bewegung des Mediums behaftet sind.

Dies führt dazu, dass das durch FFT-transformierte ZF-Signal (Zwischenfrequenzsignal), einer von der Fließgeschwindigkeit abhängige Verbreiterung aufweist, wie dies durch die Peaks 703 und 704 der Fig. 7 angedeutet ist. Wie auch in den Fig. 4 und 6 bezeichnet die horizontale Achse 701 die Entfernung und die vertikale Achse 702 die Amplitude. Der schmälere Peak 703 entspricht einer geringeren Fließgeschwindigkeit des Mediums und der breitere Peak 704 entspricht einer hohen Fließgeschwindigkeit des Mediums.

Aus dieser Verbreiterung kann die Fließgeschwindigkeit bestimmt werden. Eine geringe Verbreiterung bedeutet geringe Geschwindigkeit, eine große Verbreitung bedeutet hohe Geschwindigkeit.

Das Messgerät kann eine entsprechende Eichung aufweisen, so dass die Fließgeschwindigkeit über die Messung der Verbreiterung hinreichend genau bestimmt werden kann.

Bei Verwendung von zwei Antennen, wie dies in der Fig. 2 dargestellt ist, kann mit der Antenne 204 nach dem zuvor genannten Verfahren die Fließgeschwindigkeit und ggf. auch die Fließrichtung bestimmt werden. In einem zweiten Messdurchlauf ebenfalls mit dem FMCW-Verfahren kann mittels der Antenne 203 der Füllstand bestimmt werden.

Beide Werte können dann ausgegeben werden bzw. zur Berechnung der Durchflussmenge verwendet werden.

Fig. 8 zeigt ein Flussdiagramm eines Verfahrens gemäß einem Ausführungsbeispiel der Erfindung. In Schritt 801 erfolgt die Erzeugung eines Sendesignals durch ein Signalerzeugungsmodul. In Schritt 802 wird das erzeugte Sendesignal durch eine Antennenanordnung in eine erste Richtung, die beispielsweise senkrecht zur Fließrichtung des Mediums liegt, und in eine zweite Richtung, die ungleich der ersten Richtung ist, abgestrahlt. In Schritt 803 wird das reflektierte Sendesignal durch die Antennenanordnung aufgenommen und in Schritt 804 erfolgt eine Bestimmung der Distanz zum Medium sowie der Fließgeschwindigkeit des Mediums durch Auswertung des von dem Medium reflektierten und von der Antennenanordnung aufgenommenen Sendesignals.

Ergänzend sei darauf hingewiesen, dass "umfassend" und "aufweisend" keine anderen Elemente oder Schritte ausschließt und "eine" oder "ein" keine Vielzahl ausschließt. Bezugszeichen in den Ansprüchen sind nicht als Einschränkungen anzusehen.

## Patentansprüche

1. Füllstandmessgerät (100) zur Bestimmung einer Distanz zu einem Medium sowie einer Fließgeschwindigkeit des Mediums durch Auswertung eines von dem Füllstandmessgerät abgestrahlten und von dem Medium reflektierten Sendesignals, das Füllstandmessgerät aufweisend:
ein Signalerzeugungsmodul (101) zur Erzeugung des Sendesignals;
eine Antennenanordnung (102, 201, 202), welche eine erste Antenne (201) und eine zweite Antenne (202) aufweist, zum Abstrahlen des Sendesignals in eine erste Richtung (103) senkrecht zur Fließrichtung des Mediums und in eine zweite Richtung (104), die ungleich der ersten Richtung ist;
eine Prozessoreinheit (105) zur Bestimmung der Distanz zum Medium sowie der Fließgeschwindigkeit des Mediums durch Auswertung des von dem Medium reflektierten und von der Antennenanordnung aufgenommenen Sendesignals; **dadurch gekennzeichnet, dass** die Bestimmung der Fließgeschwindigkeit dadurch getriggert wird, dass sich die Distanz zum Medium während einer vorbestimmten Zeit um mehr als einen vorbestimmten Schwellwert geändert hat und / oder eine bestimmte Anzahl an Distanzmessungen erfolgt ist.

2. Füllstandmessgerät nach Anspruch 1,
wobei die erste Antenne zum Abstrahlen des Sendesignals in die erste Richtung (103) und die zweite Antenne zum Abstrahlen des Sendesignals in die zweite Richtung (104) ausgeführt ist.

3. Füllstandmessgerät nach Anspruch 2,
wobei die zwei Antennen (201, 202) beide über einen Richtkoppler (203), einen Umschalter (203) oder einen Leistungssplitter (203) an das Signalerzeugungsmodul (101) angeschlossen sind.

4. Füllstandmessgerät nach einem der vorhergehenden Ansprüche,
wobei das Signalerzeugungsmodul (101) ein FMCW-Modul ist und es sich zumindest bei einem ersten Teil des Sendesignals um ein frequenzmoduliertes kontinuierliches Wellensignal, FMCW, handelt.

5. Füllstandmessgerät nach Anspruch 4,
wobei das Sendesignal einen zweiten Teil aufweist, bei dem es sich um ein kontinuierliches Wellensignal, CW, handelt;
wobei das Füllstandmessgerät ausgeführt ist, den ersten Teil des Sendesignals nur in die erste Richtung und den zweiten Teil des Sendesignals nur in die zweite Richtung abzustrahlen.

6. Füllstandmessgerät nach Anspruch 4,
wobei das FMCW-Modul (101) zur Erzeugung eines frequenzmodulierten Sendesignals ausgeführt ist, das eine ansteigende und eine abfallende Frequenzrampe aufweist.

7. Füllstandmessgerät nach einem der vorhergehenden Ansprüche,
wobei die Prozessoreinheit (105) zur Bestimmung der Distanz zum Medium sowie der Fließgeschwindigkeit des Mediums innerhalb eines einzigen Messzyklus ausgeführt ist.

8. Füllstandmessgerät nach einem der vorhergehenden Ansprüche,
ausgeführt als Füllstandradar.

9. Füllstandmessgerät nach einem der vorhergehenden Ansprüche,
ausgeführt als 2-Leiter Sensor.

10. Füllstandmessgerät nach einem der vorhergehenden Ansprüche,
ausgeführt zur zusätzlichen Bestimmung der Fließrichtung des Mediums.

11. Füllstandmessgerät nach einem der vorhergehenden Ansprüche,
wobei die Antennenanordnung ein planares Antennenarray aufweist.

12. Verfahren zum Bestimmen einer Distanz zu einem Medium sowie einer Fließgeschwindigkeit des Mediums durch Auswerten eines von einem Messgerät abgestrahlten und von dem Medium reflektierten Sendesignals, das Verfahren aufweisend die Schritte:
Erzeugen eines Sendesignals;
Abstrahlen des Sendesignals in eine erste Richtung (103) senkrecht zur Fließrichtung des Mediums und in eine zweite Richtung (104), die ungleich der ersten Richtung ist;
Bestimmen der Distanz zum Medium sowie der Fließgeschwindigkeit des Mediums durch Auswerten des von dem Medium reflektierten und von einer Antennenanordnung aufgenommenen Sendesignals; **dadurch gekennzeichnet, dass** die Bestimmung der Fließgeschwindigkeit dadurch getriggert wird, dass sich die Distanz zum Medium während einer vorbestimmten Zeit um mehr als einen vorbestimmten Schwellwert geändert hat und / oder eine bestimmte Anzahl an Distanzmessungen erfolgt ist.

13. Programmelement, das, wenn es auf einer Prozessoreinheit (105) eines Füllstandmessgeräts ausgeführt wird, das Füllstandmessgerät anleitet, die Schritte nach Anspruch 12 auszuführen.

14. Computerlesbares Medium, auf dem ein Programmelement gespeichert ist, das, wenn es auf einer Prozessoreinheit (105) eines Füllstandmessgeräts ausgeführt wird, das Füllstandmessgerät anleitet, die Schritte nach Anspruch 12 auszuführen.

## Claims

1. A fill level measurement device (100) for determining a distance from a medium and a flow speed of the medium by evaluating a transmission signal emitted by the fill level measurement device and reflected by the medium, comprising:
a signal generator module (101) for generating the transmission signal;
an antenna arrangement (102, 201, 202), comprising a first antenna (201) and a second antenna (202), for emitting the transmission signal in a first direction (103) perpendicular to a flow direction of the medium and in a second direction (104), the second direction being different from the first direction; and
a processor unit (105) for determining the distance and the flow speed by evaluating the transmission signal reflected by the medium and received by the antenna arrangement, **characterized in that**
the determination of the flow speed is triggered by the distance to the medium having changed by more than a predetermined threshold value over a predetermined period of time and/or by a certain number of distance measurements having been carried out.

2. The fill level measurement device according to claim 1, wherein the first antenna is configured to emit the transmission signal in the first direction (103) and the second antenna is configured to emit the transmission signal in the second direction (104).

3. The fill level measurement device according to claim 2, wherein the first and second antennas (201, 202) are connected to the signal generator module (101) via a directional coupler (203), a switch (203) or a power splitter (203).

4. The fill level measurement device according to any of the preceding claims, wherein the signal generator module (101) is a frequency-modulated continuous wave ("FMCW") module and at least a first part of the transmission signal is an FMCW signal.

5. The fill level measurement device according to claim 4, wherein the transmission signal has a second part which is a continuous wave ("CW") signal; and
wherein the fill level measurement device is configured to emit the first part of the transmission signal only in the first direction and the second part of the transmission signal only in the second direction.

6. The fill level measurement device according to claim 4, wherein the FMCW module (101) is configured to generate a frequency-modulated transmission signal, which has a rising and a falling frequency ramp.

7. The fill level measurement device according to any of the preceding claims, wherein the processor unit (105) is configured to determine the distance from the medium and the flow speed of the medium within a single measurement cycle.

8. The fill level measurement device according to any of the preceding claims, wherein the fill level measurement device is a fill level radar.

9. The fill level measurement device according to any of the preceding claims, wherein the fill level measurement device is a 2-wire line sensor.

10. The fill level measurement device according to any of the preceding claims, wherein the processor is configured to determine the flow direction of the medium.

11. The fill level measurement device according to any of the preceding claims, wherein the antenna arrangement includes a planar antenna array.

12. A method for determining a distance from a medium and a flow speed of the medium by evaluating a transmission signal emitted by a measurement device and reflected by the medium, the method comprising the steps of:
generating a transmission signal;
emitting the transmission signal in a first direction (103) perpendicular to a flow direction of the medium and a second direction (104), the second direction being different from the first direction; and
determining the distance and the flow speed by evaluating the transmission signal reflected by the medium and received by an antenna arrangement,
**characterized in that**
determining the flow speed is triggered by the distance to the medium having changed by more than a predetermined threshold value over a predetermined period of time and/or by a certain number of distance measurements having been carried out.

13. A program element which, when executed on a processor unit (105) of a fill level measurement device, causes the fill level measurement device to carry out the steps according to claim 12.

14. A Computer-readable medium on which a program element is stored which, when executed on a processor unit (105) of a fill level measurement device, causes the fill level measurement device to carry out the steps according to claim 12.

## Revendications

1. Appareil de mesure de niveau (100) pour la détermination d'une distance par rapport à un fluide, ainsi que d'une vitesse d'écoulement du fluide, par évaluation d'un signal émetteur émis par l'appareil de mesure de niveau et réfléchi par le fluide, l'appareil de mesure de niveau comprenant :
un module de génération de signal (101) pour générer le signal émetteur ;
un agencement d'antenne (102, 201, 202), qui présente une première antenne (201) et une seconde antenne (202), pour émettre le signal émetteur dans une première direction (103) perpendiculaire à la direction d'écoulement du fluide et dans une seconde direction (104), différente de la première direction;
une unité centrale (105) pour la détermination de la distance par rapport au fluide, ainsi que de la vitesse d'écoulement du fluide, par évaluation du signal émetteur réfléchi par le fluide et reçu par l'agencement d'antenne ;
**caractérisé en ce que**
la détermination de la vitesse d'écoulement est déclenchée du fait
que la distance par rapport au fluide s'est modifiée pendant un temps prédéfini de plus d'une valeur de seuil prédéfinie et/ou un nombre défini de mesures de distance s'effectue.

2. Appareil de mesure de niveau selon la revendication 1,
la première antenne étant réalisée pour émettre le signal émetteur dans la première direction (103) et la seconde antenne étant réalisée pour émettre le signal émetteur dans la seconde direction (104).

3. Appareil de mesure de niveau selon la revendication 2,
les deux antennes (201, 202) étant raccordées au module de génération de signal (101) par l'intermédiaire d'un coupleur directionnel (203), d'un commutateur (203) ou d'un séparateur de puissance (203).

4. Appareil de mesure de niveau selon l'une des revendications précédentes,
le module de génération de signal (101) étant un module FMCW, et au moins une première partie du signal émetteur étant un signal d'onde continu modulé en fréquence, FMCW.

5. Appareil de mesure de niveau selon la revendication 4,
le signal émetteur présentant une seconde partie, qui est un signal d'onde continu, CW ;
l'appareil de mesure de niveau étant réalisé pour émettre la première partie du signal émetteur uniquement dans la première direction et la seconde partie du signal émetteur uniquement dans la seconde direction.

6. Appareil de mesure de niveau selon la revendication 4,
le module FMCW (101) étant réalisé pour générer un signal émetteur modulé en fréquence, qui présente une rampe de fréquence ascendante et une rampe de fréquence descendante.

7. Appareil de mesure de niveau selon l'une des revendications précédentes,
l'unité centrale (105) étant réalisée pour déterminer la distance par rapport au fluide ainsi que la vitesse d'écoulement du fluide à l'intérieur d'un cycle de mesure unique.

8. Appareil de mesure de niveau selon l'une des revendications précédentes, réalisé sous forme de radar de niveau.

9. Appareil de mesure de niveau selon l'une des revendications précédentes, réalisé sous forme de capteur à deux conducteurs.

10. Appareil de mesure de niveau selon l'une des revendications précédentes, réalisé pour la détermination supplémentaire de la direction d'écoulement du fluide.

11. Appareil de mesure de niveau selon l'une des revendications précédentes, l'agencement d'antenne comprenant un réseau d'antenne planaire.

12. Procédé de détermination d'une distance par rapport à un fluide, ainsi que d'une vitesse d'écoulement du fluide, par évaluation d'un signal émetteur émis par un appareil de mesure et réfléchi par le fluide, le procédé comprenant les étapes :
génération d'un signal émetteur ;
émission du signal émetteur dans une première direction (103) perpendiculaire à la direction d'écoulement du fluide et dans une seconde direction (104) différente de la première direction;
détermination de la distance par rapport au fluide, ainsi que de la vitesse d'écoulement du fluide, par évaluation du signal émetteur réfléchi par le fluide et reçu par un agencement d'antenne.
**caractérisé en ce que**
la détermination de la vitesse d'écoulement est déclenchée du fait que la distance par rapport au fluide s'est modifiée pendant un temps prédéfini de plus d'une valeur de seuil prédéfinie et/ou un nombre défini de mesures de distance s'effectue.

13. Elément de programme qui, lorsqu'il est exécuté sur une unité centrale (105) d'un appareil de mesure de niveau, donne l'ordre à ce dernier de mettre en oeuvre les étapes selon la revendication 12.

14. Support lisible par ordinateur, sur lequel est mémorisé un élément de programme qui, lorsqu'il est exécuté sur une unité centrale (105) d'un appareil de mesure de niveau, donne l'ordre à ce dernier de mettre en oeuvre les étapes selon la revendication 12.
